# EUROPÄISCHE PATENTSCHRIFT

(11) **EP 2 159 084 B1**
(45) Veröffentlichungstag und Bekanntmachung des Hinweises auf die Patenterteilung: **22.09.2010**
(21) Anmeldenummer: 08014888.5
(22) Anmeldetag: 22.08.2008
(51) Int. Cl.: B60D 5/00, B61D 17/22

(54) **Übergang zwischen zwei gelenkig miteinander verbundenen Fahrzeugen**
Connection between two vehicles with jointed couplings
Passage entre deux véhicules reliés de manière articulée

(43) Veröffentlichungstag der Anmeldung: 03.03.2010
(73) Patentinhaber: Hübner GmbH, 34123 Kassel (DE)
(72) Erfinder: Mosaner, Knud, 34127 Kassel (DE)
(74) Vertreter: Walther, Walther & Hinz GbR

(56) Entgegenhaltungen:
- EP-A- 0 830 262
- DE-A1- 3 036 105
- DE-A1- 3 045 419
- DE-A1- 4 305 892
- DE-A1- 10 204 703

## Beschreibung

Die vorliegende Erfindung betrifft einen Übergang zwischen zwei gelenkig miteinander verbundenen Fahrzeugen, umfassend eine Übergangsbrücke oder Plattform sowie einen die Brücke oder die Plattform überspannenden äußeren Balg, sowie einen beabstandet dazu angeordneten inneren Balg. Bekannt sind zwischen zwei gelenkig miteinander verbundenen Fahrzeugen angeordnete Doppelwellen- oder auch Doppelfaltenbälge. Hierbei ist der innere Balg beabstandet zum äußeren Balg angeordnet, wobei der innere Balg mit dem äußeren Balg gegebenenfalls im Bereich der endseitigen Balgrahmen verbunden ist. Eingesetzt werden solche Doppelwellenbälge insbesondere dort, wo es auf eine gute Geräuschdämmung ankommt.

Darüber hinaus sind auch sogenannte Spurfugenabdeckbälge als innere Bälge bekannt. Ein Übergang mit einem Spurfugenabdeckbalg ist beispielsweise aus der gattungsbildenden EP 0 830 262 B1 bekannt. Der dort dargestellte Spurfugenabdeckbalg weist an seinen Enden jeweils einen Rahmen auf, mit welchem der Spurfugenabdeckbalg an den entsprechenden Rahmen des äußeren Balges, also des Durchgangsbalges angeordnet ist. Ein solcher Spurfugenabdeckbalg dient dazu, wie dies auch bereits eingangs erläutert wurde, um die Spurfuge zwischen dem Durchgangsbalg einerseits und der Übergangsbrücke oder der Plattform andererseits zu überbrücken. Dies deshalb, um zu verhindern, dass Personen wie auch immer in die Spurfuge gelangen und Verletzungen davontragen können. Darüber hinaus bietet der Spurfugenabdeckblag aber auch die Möglichkeit, dass in dem durch den Spurfugenabdeckbalg in Verbindung mit dem Durchgangsbalg gebildeten tunnelartigen Hohlraum Versorgungsleitungen zwischen den beiden gelenkig miteinander verbundenen Fahrzeugen geführt werden können.

In jüngster Zeit ist an die Hersteller von Übergangseinrichtungen immer wieder von den Verkehrsbetrieben das Ansinnen herangetragen worden, innerhalb des Balges eines Übergangs für mehr Helligkeit zu sorgen, vorzugsweise soll die gewünschte Helligkeit etwa der entsprechen, wie sie im übrigen Fahrzeug herrscht. Bekannt ist nun, dass Bälge, die üblicherweise ein Gewebe aufweisen, das mit einem Kunststoff beschichtet ist, im Wesentlichen lichtundurchlässig ist. Das heißt, im Bereich des Übergangs findet keine unmittelbare Lichteinstrahlung statt. Insofern ist bereits in der DE 102 04 703 B4 ein lichtdurchlässiger Balg beschrieben worden ist. Es hat sich allerdings herausgestellt, dass lichtdurchlässige Durchgangsbälge insoweit problematisch sind, als das Material, was zur Herstellung eines lichtdurchlässigen Balges benötigt wird, im Wesentlichen auf Dauer nicht lichtbeständig ist und vergilbt bzw. rissig wird. Dies gilt insbesondere dann, wenn ein solches Fahrzeug, beispielsweise ein Bus, erheblicher Sonneneinstrahlung ausgesetzt ist, wie dies beispielsweise in südlichen Ländern der Fall ist. Es wurde zwar versucht, durch die Verwendung von Silikonkautschuken Abhilfe zu schaffen, jedoch ist dies nicht nur übermäßig teuer, sondern verhindert auch auf Dauer nicht, dass das Balgmaterial aufgrund der Lichteinstrahlung Schaden nimmt.

Gleichwohl besteht nach wie vor ein vivendes Interesse der Verkehrsbetriebe daran, im Bereich des Balges eines Übergangs zwischen zwei gelenkig miteinander verbundenen Fahrzeugen für eine Helligkeit sorgen, die in etwa der entspricht, die im übrigen Fahrzeug herrscht. Das heißt, es soll eine Helligkeit auch im Bereich des Übergangs des Fahrzeugs vorherrschen, die den Eindruck vermittelt, als ob Licht von außen durch den Balg scheinen würde.

Zur Lösung der Aufgabe ist erfindungsgemäß vorgesehen, dass der innere Balg zumindest partiell ein lichtdurchlässiges (transluzentes) Material aufweist, wobei hinter dem inneren Balg ein Leuchtmittel angeordnet ist. Wie bereits an anderer Stelle erläutert, befindet sich hinter dem inneren Balg in dem Raum zwischen inneren und äußeren Balg ein Raum, der üblicherweise nur zu einem geringen Umfang belegt ist, beispielsweise mit Versorgungsleitungen. Wird nun in diesen Raum ein oder auch mehrere Leuchtmittel untergebracht, so ergibt sich in Verbindung mit dem transluzenten Material des inneren Balges ein etwas diffuses Licht, was allerdings im Endeffekt einer Beleuchtungssituation nahe kommt, bei der ein transluzenter Durchgangsbalg Verwendung findet, der Sonneneinstrahlung ausgesetzt ist. Vorteilhaft an einer solchen Ausgestaltung ist insbesondere, dass das Material, auch wenn es sich hierbei beispielsweise um ein PVC- oder TPU-Material handelt, im Wesentlichen über die Zeit unverändert bleibt, also insbesondere nicht vergilbt oder rissig wird, wie dies der Fall ist, wenn, wie oben erwähnt, ein solches Balgmaterial unmittelbar der Sonneneinstrahlung ausgesetzt ist.

So ist insbesondere vorgesehen, dass der innere Balg ein Band aus lichtdurchlässigem Material aufweist, wobei sich das Leuchtmittel vorteilhaft über die Länge des Bandes erstreckt. Um zu gewährleisten, dass der innere Balg der Bewegung des äußeren Balges folgen kann, ist insbesondere vorgesehen, dass das lichtdurchlässige Band ebenfalls balgförmig ausgebildet ist. Zur Erzeugung unterschiedlicher optischer Eindrücke kann das Leuchtmittel oder auch das transluzente Material farbig gestaltet sein. Denkbar ist ebenfalls eine statische oder dynamische Hintergrundprojektion von Bildern z. B. für die Werbung auf den Balg bzw. das Lichtband des Balges.

Wie bereits an anderer Stelle erläutert, kann das lichtdurchlässige Band aus einem PVC- oder TPU-Material ausgebildet sein. Hierbei kann insbesondere auch vorgesehen sein, dass das lichtdurchlässige Band aus einem mit PVC oder TPU beschichteten Gewebe ausgebildet ist. Denkbar ist ebenfalls die Verwendung von Silikonkautschuk, und zwar nicht nur als Material als solches zur Herstellung des lichtdurchlässigen Bandes, sondern auch in Verbindung mit einem Gewebe, das mit einem solchen transluzenten Silikonkautschuk beschichtet ist.

Weitere Merkmale ergeben sich aus den Unteransprüchen.

Insbesondere ist der innere Balg ein Spurfugenabdeckbalg. Vorteilhaft ist bei einem solchen Spurfugenabdeckbalg, dass hiermit die Möglichkeit der Nachrüstung besteht.

Denn Spurfugenabdeckbälge sind im Verhältnis zu den Gesamtkosten eines Durchgangsbalges relativ gesehen preiswert. Insofern besteht die Möglichkeit, an im Einsatz befindlichen Fahrzeugen den dort vorhandenen Spurfugenabdeckbalg durch einen Spurfugenabdeckbalg zu ersetzen, der mit einem solchen lichtdurchlässigen Material versehen ist, um dann in den Raum hinter dem Spurfugenabdeckbalg zur Beleuchtung ein Leuchtmittel einzusetzen.

Der Spurfugenabdeckbalg besteht aus einem vertikalen und einem schräg verlaufenden Balgabschnitt, wobei das lichtdurchlässige Band im vertikalen Abschnitt angeordnet ist. Denkbar ist aber ebenfalls, den schrägverlaufenden Balgabschnitt mit einem lichtdurchlässigen Band zu versehen. Allerdings ist hier dann die Gefahr der Verschmutzung etwas größer.

Anhand der Zeichnungen wird die Erfindung beispielhaft näher erläutert.
- Figur 1: zeigt schematisch den Übergang zwischen zwei gelenkig miteinander verbundenen Fahrzeugen mit einem Spurfugenabdeckbalg;
- Figur 2: zeigt schematisch einen Doppelwellenbalg mit einem lichtdurchlässigen Band;
- Figur 3: zeigt einen Schnitt gemäß der Linie III - III aus Figur 1 und Figur 2.

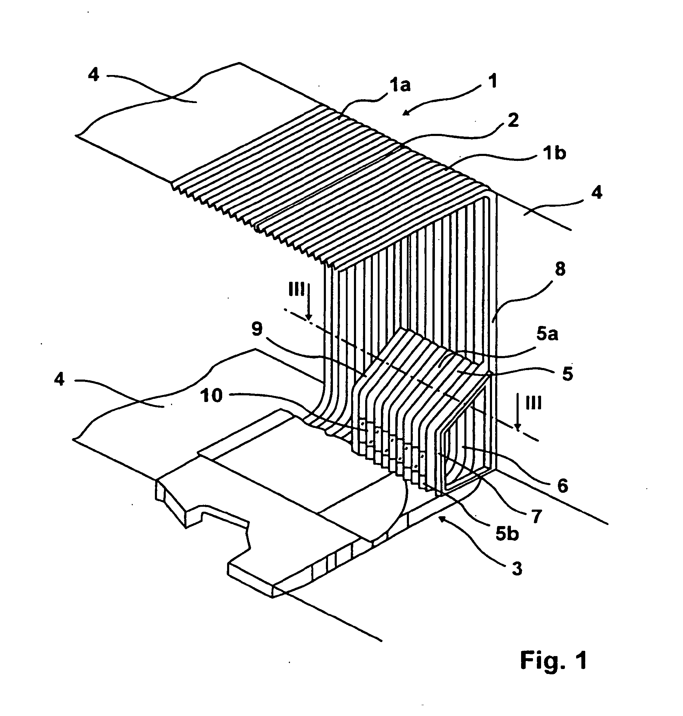

Bei der Darstellung gemäß Figur 1 ist der Übergang insgesamt mit 3 bezeichnet, wobei der Übergangsbalg das Bezugszeichen 1 aufweist. An dem Übergangsbalg 1 befindet sich der mit 5 bezeichnete Spurfugenabdeckbalg. Der Übergangsbalg 1 besitzt endseitig im Übergang zum jeweiligen Fahrzeugkasten (4) einen Rahmen 8, wobei mittig zur Teilung des Übergangsbalges 1 in die beiden Balghälften 1a, 1b ein Kuppelrahmen 2 vorgesehen ist. Korrespondierend hierzu ist der Spurfugenabdeckbalg 5 ebenfalls mit einem Rahmen 7 versehen, der an dem Rahmen 8 des Übergangsbalges angeordnet ist. Gleiches gilt in Bezug auf den Rahmen 9 des Spurfugenabdeckbalges, der an dem Kuppelrahmen 2 befestigt ist.

Der Spurfugenabdeckbalg 5 besitzt zwei Abschnitte, und zwar einen schrägverlaufenden Abschnitt 5a und einen vertikalen Abschnitt 5b. Innerhalb des vertikalen Abschnittes 5b befindet sich das Lichtband, das mit 10 bezeichnet ist. Dieses Lichtband ist entsprechend der Kontur des Spurfugenabdeckbalges ebenfalls balgartig ausgebildet und besteht aus einem PVC- oder Silikonsmaterial.

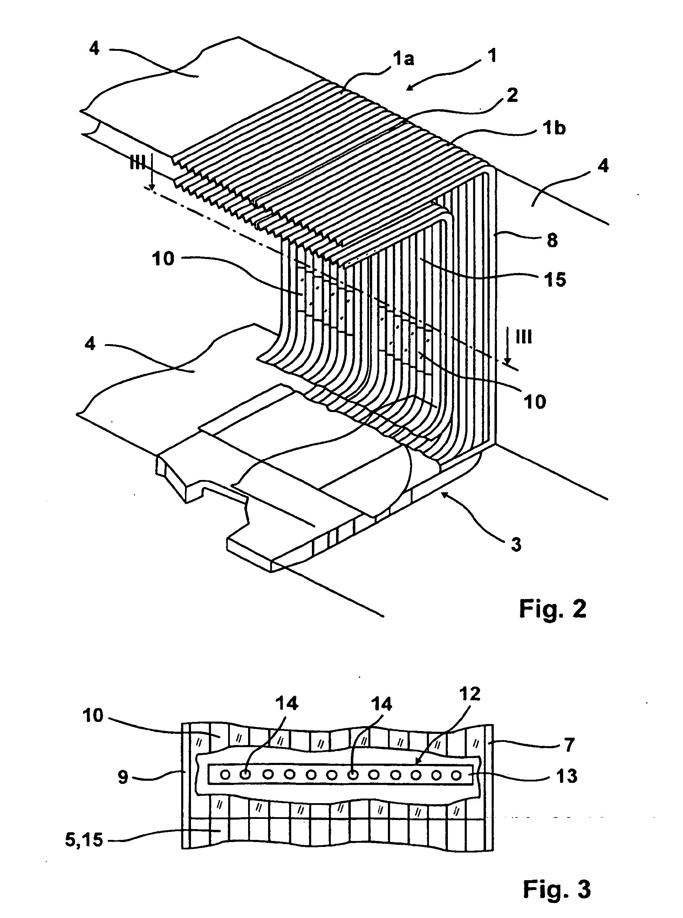

Die Ausbildung gemäß Figur 2 unterscheidet sich insofern von Figur 1, als dort schematisch ein Doppelwellenbalg 15 dargestellt ist, als Teil eines Übergangs 3 zwischen den Fahrzeugkästen 4 zweier Fahrzeuge, wobei der innere Balg 15a ebenfalls zumindest partiell aus einem lichtdurchlässigen Material besteht. Beispielhaft zeigt der innere Balg 15a ein Lichtband 10, ganz ähnlich wie bei dem Spurfugenabdeckbalg 5.

Wie sich der Figur 1 und 3 entnehmen lässt, befindet sich in dem Hohlraum 6 hinter dem Spurfugenabdeckbalg 5 oder dem inneren Balg 15 die insgesamt mit 12 bezeichnete Beleuchtung. Die mit 12 bezeichnete Beleuchtung ist als Lichtleiste 13 mit einzelnen Leuchtmitteln 14 ausgebildet und befindet sich hinter dem Lichtband 10.

## Patentansprüche

1. Übergang zwischen zwei gelenkig miteinander verbundenen Fahrzeugen, umfassend einen Übergangsbrücke oder Plattform sowie einen die Brücke oder die Plattform umspannenden äußeren Balg, sowie einen beabstandet dazu angeordneten inneren Balg,
**dadurch gekennzeichnet,**
**dass** der innere Balg (5, 15) zumindest partiell ein lichtdurchlässiges Material aufweist, wobei hinter dem inneren Balg (5, 15) ein Leuchtmittel (14) angeordnet ist.

2. Übergang zwischen zwei gelenkig miteinander verbundenen Fahrzeugen nach Anspruch 1,
**dadurch gekennzeichnet,**
**dass** der innere Balg (5, 15) ein Band (10) aus lichtdurchlässigem Material aufweist.

3. Übergang zwischen zwei gelenkig miteinander verbundenen Fahrzeugen nach Anspruch 2,
**dadurch gekennzeichnet,**
**dass** sich das Leuchtmittel (14) über die Länge des Bandes (10) erstreckt.

4. Übergang zwischen zwei gelenkig miteinander verbundenen Fahrzeugen nach einem der voranstehenden Ansprüche,
**dadurch gekennzeichnet,**
**dass** das lichtdurchlässige Band (10) entsprechend dem inneren Balg (5, 15) balgförmig ausgebildet ist.

5. Übergang zwischen zwei gelenkig miteinander verbundenen Fahrzeugen nach einem der voranstehenden Ansprüche,
**dadurch gekennzeichnet,**
**dass** der innere Balg ein Spurfugenabdeckbalg (5) ist, der einen vertikalen und einen schrägverlaufenden Balgabschnitt (5a, 5b) aufweist, wobei das lichtdurchlässige Band (10) im vertikalen Abschnitt (5b) angeordnet ist.

6. Übergang zwischen zwei gelenkig miteinander verbundenen Fahrzeugen nach einem der voranstehenden Ansprüche,
**dadurch gekennzeichnet,**
**dass** das lichtdurchlässige Band (10) aus einem PVC- oder TPU-Material ausgebildet ist.

7. Übergang zwischen zwei gelenkig miteinander verbundenen Fahrzeugen nach Anspruch 6,
**dadurch gekennzeichnet,**
**dass** das lichtdurchlässige Band (10) aus einem mit PVC oder TPU beschichteten Gewebe ausgebildet ist.

8. Übergang zwischen zwei gelenkig miteinander verbundenen Fahrzeugen nach einem der voranstehenden Ansprüche,
**dadurch gekennzeichnet,**
**dass** das lichtdurchlässige Band (10) aus einem Silikonkautschuk ausgebildet ist.

9. Übergang zwischen zwei gelenkig miteinander verbundenen Fahrzeugen nach Anspruch 8,
**dadurch gekennzeichnet,**
**dass** das lichtdurchlässige Band (10) aus einem mit einem Silikonkautschuk beschichtetem Gewebe ausgebildet ist.

## Claims

1. Transition between two pivotably interconnected vehicles, comprising a transition bridge or a platform as well as an outer bellows encompassing the bridge or the platform and an inner bellows arranged at a spacing therefrom, **characterised in that** the inner bellows (5, 15) comprises at least in part a light-permeable material, wherein a lighting means (14) is arranged behind the inner bellows (5, 15).

2. Transition between two pivotably interconnected vehicles according to claim 1, **characterised in that** the inner bellows (5, 15) comprises a band (10) of light-permeable material.

3. Transition between two pivotably interconnected vehicles according to claim 2, **characterised in that** the lighting means (14) extends over the length of the band (10).

4. Transition between two pivotably interconnected vehicles according to any one of the preceding claims, **characterised in that** the light-permeable band (10) is constructed to be bellows-shaped in correspondence with the inner bellows (5, 15).

5. Transition between two pivotably interconnected vehicles according to any one of the preceding claims, **characterised in that** the inner bellows is a track joint covering bellows (5) having a vertical and an obliquely extending bellows section (5a, 5b), wherein the light-permeable band (10) is arranged in the vertical section (5b).

6. Transition between two pivotably interconnected vehicles according to any one of the preceding claims, **characterised in that** the light-permeable band (10) is constructed from a PVC or TPU material.

7. Transition between two pivotably interconnected vehicles according to claim 6, **characterised in that** the light-permeable band (10) is constructed from a fabric coated with PVC or TPU.

8. Transition between two pivotably interconnected vehicles according to any one of the preceding claims, **characterised in that** the light-permeable band (10) is constructed from a silicon rubber.

9. Transition between two pivotably interconnected vehicles according to claim 8, **characterised in that** the light-permeable band (10) is constructed from a fabric coated with a silicon rubber.

## Revendications

1. Passage entre deux véhicules reliés l'un à l'autre de façon articulée, comprenant une passerelle de passage ou plate-forme ainsi qu'un soufflet extérieur qui entoure la passerelle ou la plate-forme, et un soufflet intérieur espacé du premier,
**caractérisé en ce que**
le soufflet intérieur (5, 15) comporte au moins en partie une matière translucide, un moyen d'éclairage (14) étant disposé derrière le soufflet intérieur (5, 15).

2. Passage entre deux véhicules reliés l'un à l'autre de façon articulée selon la revendication 1,
**caractérisé en ce que**
le soufflet intérieur (5, 15) comporte une bande (10) en matière translucide.

3. Passage entre deux véhicules reliés l'un à l'autre de façon articulée selon la revendication 2,
**caractérisé en ce que**
le moyen d'éclairage (14) s'étend sur la longueur de la bande (10).

4. Passage entre deux véhicules reliés l'un à l'autre de façon articulée selon l'une des revendications précédentes,
**caractérisé en ce que**
la bande translucide (10) est en forme de soufflet qui correspond au soufflet intérieur (5, 15).

5. Passage entre deux véhicules reliés l'un à l'autre de façon articulée selon l'une des revendications précédentes,
**caractérisé en ce que**
le soufflet intérieur est un soufflet de recouvrement de joints de trace (5) qui comporte une partie de soufflet verticale et une partie de soufflet s'étendant obliquement (5a, 5b), la bande translucide (10) étant disposée dans la partie verticale (5b).

6. Passage entre deux véhicules reliés l'un à l'autre de façon articulée selon l'une des revendications précédentes,
**caractérisé en ce que**
la bande translucide (10) est faite en un matériau PVC ou TPU.

7. Passage entre deux véhicules reliés l'un à l'autre de façon articulée selon la revendication 6,
**caractérisé en ce que**
la bande translucide (10) est faite en un tissu enduit de PVC ou de TPU.

8. Passage entre deux véhicules reliés l'un à l'autre de façon articulée selon l'une des revendications précédentes,
**caractérisé en ce que**
la bande translucide (10) est faite en un caoutchouc de silicone.

9. Passage entre deux véhicules reliés l'un à l'autre de façon articulée, selon la revendication 8,
**caractérisé en ce que**
la bande translucide (10) est faite en un tissu enduit d'un caoutchouc de silicone.
